# EUROPEAN PATENT SPECIFICATION

(11) **EP 2 492 787 B1**
(45) Date of publication and mention of the grant of the patent: **27.01.2021**
(21) Application number: 12154028.0
(22) Date of filing: 06.02.2012
(51) Int. Cl.: G06F 3/044

(54) **Capacitive touch panel and a method for manufacturing the capacitive touch panel**
Kapazitive Berührungstafel und Verfahren zur Herstellung der kapazitiven Berührungstafel
Panneau tactile capacitif et son procédé de fabrication

(30) Priority: 28.02.2011 US 201161447637 P
(43) Date of publication of application: 29.08.2012
(73) Proprietor: TPK Touch Solutions Inc., Neihu Taipei City 114 (TW)
(72) Inventor: Chiu, Jui-Jung, 300 Hsinchu City (TW); Chu, Chun-Hsueh, 300 Hsinchu City (TW)
(74) Representative: Goddar, Heinz J.

(56) References cited:
- US-A1- 2007 229 470
- US-A1- 2008 277 259
- US-A1- 2009 002 338
- US-A1- 2010 059 294
- US-A1- 2010 263 944
- US-A1- 2010 265 210
- US-A1- 2010 315 347
- US-A1- 2011 018 829
- US-A1- 2011 043 466
- US-B2- 7 623 112

## Description

### BACKGROUND

### TECHNICAL FIELD

The present disclosure relates to a touch panel. More particularly, the present disclosure relates to a capacitive touch panel and a method for manufacturing the capacitive touch panel.

### DESCRIPTION OF THE RELATED ART

In recent years, touch sensing technology has been widely used. For instance, in one application of touch sensing technology, touch input interface has gradually become a popular human-machine interface used by people to input information. Moreover, at present, a capacitive touch sensing technology is a mainstream for realizing multiple touch functions among various touch sensing technologies.

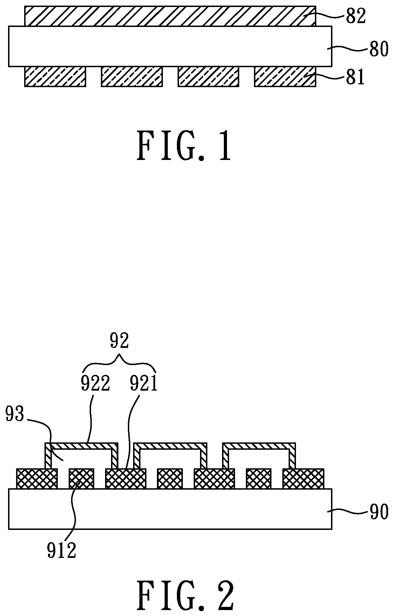

Architecture of a capacitive touch panel can mainly be classified into two modes. The first mode is shown as a schematic sectional view of a double-layer capacitive touch panel in accordance with conventional technology in FIG. 1. A plurality of first-axis (such as Y-axis) sensing electrodes 81 and a plurality of second-axis (such as X-axis) sensing electrodes 82 are formed respectively on both surfaces of a substrate 80. The first-axis sensing electrodes 81 and the second-axis sensing electrodes 82 are separated by the substrate 80, wherein the substrate 80 avoids intersection between the first-axis sensing electrodes 81 and the second-axis sensing electrodes 82. A touch point is determined by processing coupled charges between the first-axis sensing electrodes 81 and the second-axis sensing electrodes 82 before and after the capacitive touch panel is touched.

The second mode is shown as a schematic sectional view of a single-layer capacitive touch panel in accordance with conventional technology in FIG. 2. A plurality of first-axis (such as Y-axis) sensing electrodes (not shown) and a plurality of second-axis (such as X-axis) sensing electrodes 92 are formed on same surface of a substrate 90. Each first-axis sensing electrode comprises a plurality of first-axis conductive elements (not shown) and the adjacent first-axis conductive elements are connected by a first-axis wire 912. Similarly, each second-axis sensing electrode 92 comprises a plurality of second-axis conductive elements 921 and the adjacent second-axis conductive elements 921 are connected by a second-axis wire 922. Besides, an insulation material 93 is further disposed between each first-axis wire 912 and corresponding second-axis wire 922, wherein the second-axis wire 922 forms a jumper. The touch point is determined by processing the coupled charges between the first-axis sensing electrodes and the second-axis sensing electrodes 92 before and after the capacitive touch panel is touched.

However, architectures of the above conventional capacitive touch panels and corresponding manufacturing processes are complicated and therefore there exists a need for a new capacitive touch panel design, which is simple and more efficient.

US 2011 0018829 A1 discloses a sensor array comprising an electrode matrix including N receive electrodes and M transmit electrodes. The receive electrodes and the transmit electrodes comprise sensor elements that are electrically coupled to each other by an interconnect to form columns and rows through which driving or sensing signals are transmitted to and from a capacitance sensing circuit.

US 2010 0315347 A1 discloses a touch input device comprising a substrate, plural sensible conductive layers and plural first switch unit. By the first switch unit, the sensible conductive layers are electrically connected with one another in rows and columns, such that electrical conductance is established along the rows and columns.

US 2010 0059294 A1 discloses a touch sensor panel that comprises sense or drive lines formed as columns and sense or drive lines formed as rows of bricks. The bricks are coupled together by connecting traces to form rows. The columns and rows have matching polygonal shapes and form an interlocking pattern. Thereby, the issue of sensitivity problems related to the different widths and lengths of the connecting traces is addressed by means of bandwidth enhancement strips.

In US 2008 0277259 A1, a capacitive touch panel is described, which comprises an array of first conductors and second conductors formed on a substrate. Adjacent first conductors are interconnected by means of first bridging lines, and adjacent second conductors are interconnected by means of second bridging lines.

### SUMMARY OF THE INVENTION

In order to solve the above technical problems, a touch sensor structure of a capacitive touch panel is improved in the present disclosure by making a single-layer plane sensing matrix on one surface of a substrate of a touch panel for obtaining signal variation on sensing axes of the sensing matrix.

The present invention refers to a capacitive touch panel according to claim 1 and to a method for manufacturing a capacitive touch panel according to claim 7. Preferred embodiments of the invention are defined in the appended dependent claims.

Therefore, effects that the present disclosure can achieve are not only simplifying the overall architecture of the touch panel to reduce manufacturing steps and accelerate production speed, but are also significantly reducing production cost and improving production yield.

The above summary and the following detailed description and drawings are made to further explain mode, means and effects adopted to achieve the present purpose of the disclosure. The invention will be carried out according to the attached independent claims.

### BRIEF DESCRIPTION OF THE DRAWINGS

FIG. 1 is a schematic sectional view of a double-layer capacitive touch panel in accordance with conventional technology;
FIG. 2 is a schematic sectional view of a single-layer capacitive touch panel in accordance with conventional technology;
FIG. 3 is a schematic view of a capacitive touch panel in accordance with an embodiment of the present disclosure;
FIG. 4 is a schematic sectional view of the capacitive touch panel in accordance with the embodiment of the present disclosure;
FIG. 5 is an equivalent circuit view of a parasitic capacitor set of a touch sensor in accordance with the embodiment of the present disclosure;
FIG. 6 is a schematic view of signal variation of a touch sensor in accordance with an embodiment of the present disclosure;
FIG. 7 is a flowchart of a method for manufacturing a capacitive touch panel in accordance with a first embodiment of the present disclosure; and
FIG. 8 is a flowchart of a method for manufacturing a capacitive touch panel in accordance with a second embodiment of the present disclosure.

### DETAILED DESCRIPTION OF THE EMBODIMENTS

The present disclosure improves a touch sensor structure of a capacitive touch panel by directly making a single-layer plane sensing matrix on one surface of a substrate of a touch panel. In this way, signal variation on sensing axes of the sensing matrix are obtained directly through the designed single-layer plane sensing matrix and a touch point on the capacitive touch panel touched by a user can be detected in accordance with the present disclosure.

The touch sensor structure of the present disclosure can be applied to the following driving-sensing operations:
1. Driving single axis (such as X-axis) while sensing the other axis (such as Y-axis);
2. Driving single axis (such as X-axis) while sensing both different axes (X-axis and Y-axis);
3. Driving both different axes (X-axis and Y-axis) while sensing both different axes (X-axis and Y-axis).

In an embodiment, the first driving-sensing operation drives one axis of the sensing matrix and senses the other axis. In practical application, in order to detect location of the touch point more accurately, the second or the third driving-sensing operation can be adopted to detect location of the touch point by sensing two different axes. The following embodiments are described and explained based on the second driving-sensing operation.

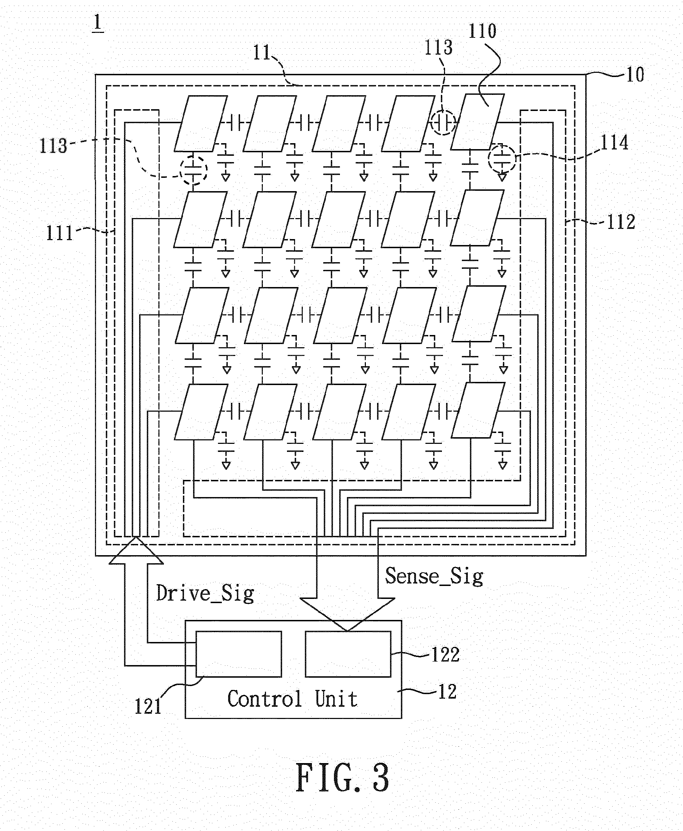

FIG. 3 illustrates a schematic view of a capacitive touch panel in accordance with an embodiment of the present disclosure. As depicted, the present embodiment provides a capacitive touch panel 1 comprising a substrate 10, a touch sensor 11, and a control unit 12. The substrate 10 works as a supporting base of the capacitive touch panel 1, and may be made of transparent materials such as glass or plastics.

The touch sensor 11 is disposed on the substrate 10. In practical design, the touch sensor 11 can be disposed on an upper surface or a lower surface of the substrate 10, which is not limited herein. Moreover, the "upper" and "lower" positions in the embodiment only represent a corresponding location relationship. For drawings of this specification, the upper surface of the substrate 10 is the one that is closer to the user while the lower surface is the one being farther from the user. In addition, the structure of the touch sensor 11 further comprises a plurality of conductive elements 110, an input bus 111, and an output bus 112.

The conductive elements 110 are arranged to form a sensing matrix on same surface of the substrate 10. According to electrical characteristics principle, a parasitic capacitor, which is a non-physical capacitor, can be formed between two general conductors. Thus, in the sensing matrix of the embodiment, each two adjacent conductive elements 110 induce a first parasitic capacitor 113 there between on a first axis and a second axis of the sensing matrix, which makes the original mutually independent conductive elements 110 form a connected reticular mode due to the effect of the first parasitic capacitor 113. On the other hand, each conductive element 110 will further induce a second parasitic capacitor 114 with the ground.

Besides, material of the conductive elements 110 can include Indium Tin Oxide (ITO), Indium Zinc Oxide (IZO), Gallium Zinc Oxide (GZO), Electroconductive Polymer, Carbon Nanotube-based Thin Films (CNT), ITO Nanoparticles, Nanowires, Mg(OH)2 : C, Graphene, or Zinc Oxide (ZnO). Moreover, shape of the conductive elements 110 of the present embodiment is designed as rhombic; and other shapes such as round, oval, polygonal, or cross can also be adopted. The material or the shape of the conductive elements 110 is not limited by the present disclosure.

The input bus 111 is electrically connected to one end of the first axis (such as X-axis) of the sensing matrix. The output bus 112 is electrically connected to the other end of the first axis of the sensing matrix and electrically connected to one end of the second axis (such as Y-axis) of the sensing matrix. Thus, the sensing matrix of the embodiment can be applied to the second driving-sensing operation. Referring to FIG. 3, the sensing matrix of the present embodiment is a simplified 5*4 matrix. In other words, the input bus 111 comprises four wire channels that are respectively electrically connected to one ends of four conductive element groups on the first axis formed by connection of the conductive elements 110. The output bus 112 comprises nine wire channels to be respectively electrically connected to the other ends of four conductive element groups on the first axis formed by connection of the conductive elements 110 and one ends of five conductive element groups on the second axis formed by connection of the conductive elements 110.

In other embodiments, the input bus 111 can also be further electrically connected to the other end of the second axis of the sensing matrix, which makes the sensing matrix apply to the third driving-sensing operation.

The control unit 12 is electrically connected to the input bus 111 and the output bus 112. The control unit 12 is used to generate a drive signal Drive_Sig to the input bus 111 and to receive at least one sense signal Sense_Sig through the output bus 112. More specifically, the control unit 12 comprises at least two multiplexers 121, 122. The multiplexer 121 is electrically connected to the input bus 111 to switch and output the drive signal Drive_Sig to different wire channels of the input bus 111 in sequence and the other multiplexer 122 is electrically connected to the output bus 112 to switch and receive the sense signal Sense_Sig transmitted by different wire channels of the output bus 112 in sequence.

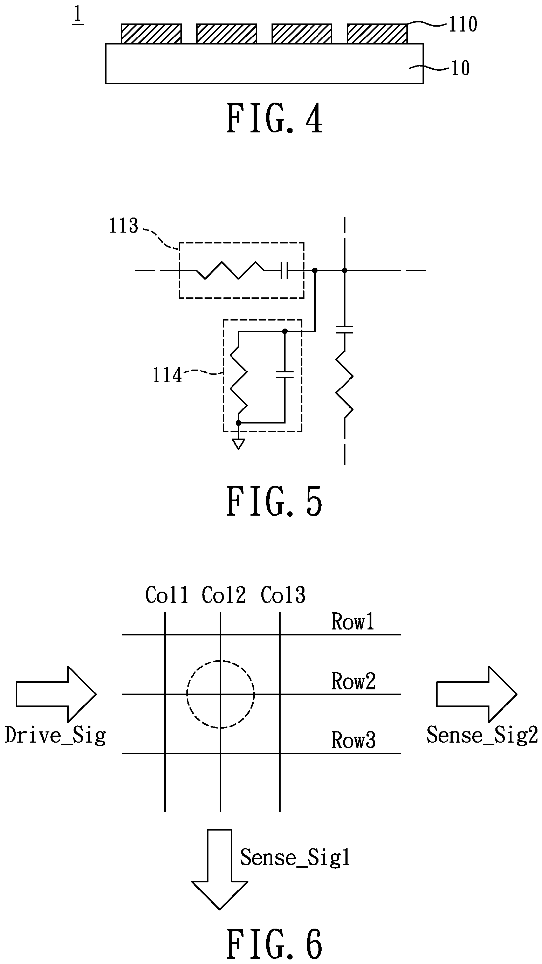

FIG. 4 illustrates a schematic sectional view of the capacitive touch panel in accordance with the embodiment of the present disclosure. FIG. 4 further illustrates a stack relationship between the substrate 10 and the conductive elements 110. As shown in FIG. 4, the sensing matrix arranged and formed by the conductive elements 110 is directly disposed on the same plane of the upper surface of the substrate 10. Therefore, under the simplified architecture of the capacitive touch panel 1, the present embodiment can obtain signal variations on the first axis and the second axis through single-layer sensing matrix.

Next, in order to further illustrate operation of the touch sensor 11 in accordance with the present embodiment, please refer to FIG. 5 based on the architecture of FIG. 3. FIG. 5 shows an equivalent circuit of a parasitic capacitor set of the touch sensor in accordance with the embodiment of the present disclosure. As shown in FIG. 5, each first parasitic capacitor 113 formed in the sensing matrix is equivalent to a RC series circuit and each second parasitic capacitor 114 is equivalent to a RC parallel circuit.

In another embodiment, the control unit 12 generates the drive signal Drive_Sig of 10MHz to the input bus 111 so that the touch sensor 11 operates under the working frequency of 10MHz, wherein the frequency of the drive signal Drive_Sig determines penetration capability of the signal. It can be designed according to practical application without limitation.

In the condition that no touch point exists, the RC series circuit equivalent to the first parasitic capacitor 113 can be, for example, a resistor of 50Ω serially connecting with a capacitor of 1pF. The RC parallel circuit equivalent to the second parasitic capacitor 114 can be, for example, a resistor of 100MΩ parallelly connecting with a capacitor of 1pF. When a user performs touch operation to generate at least one touch point, charges of the first parasitic capacitor 113 and the second parasitic capacitor 114 corresponding to the touch point and its surrounding area will be absorbed so that equivalent capacitance value reduces. In accordance with simulated data, the equivalent capacitance value of the first parasitic capacitor 113 and the second parasitic capacitor 114 corresponding to the touch point may reduce from 1pF to 0.8pF approximately. The farther the distance from the touch point, the lesser charges will be absorbed and the lower the extent of equivalent capacitance value reduction will be. It would be appreciated that the change of actual capacitance value can be subject to error due to the influence of environmental factors. According to what is mentioned above, at least one row and one column with maximum voltage variations can be obtained by detecting voltage change of all rows and columns of the sensing matrix before and after touching. Therefore, the touch point can be detected by calculating intersection of the row and the column with maximum variations.

FIG.6 is a schematic view of signal variation of a touch sensor in accordance with an embodiment of the present disclosure. As depicted, one end of the sensing matrix on X-axis (row) in accordance with the present embodiment is used to receive the input of drive signal Drive_Sig. One end of the sensing matrix on Y-axis (column) and the other end of the sensing matrix on X-axis are used to output the sense signals Sense_Sig1 and Sense_Sig2 respectively. In addition, the embodiment illustrates the difference of signal variations on assumption of using a M^{∗}N sensing matrix with first sensing column Coll, second sensing column Col2, third sensing column Col3, first sensing row Row1, second sensing row Row2, and third sensing row Row3.

First of all, illustration will be made by comparing the sense signals Sense_Sig1 between different columns as shown in the following Table 1. The drive signal Drive_Sig of the embodiment enters the sensing matrix from the left side in FIG. 6 and based on the electric principle of signal attenuation, signal attenuation amounts of the first sensing column Coll, the second sensing column Col2, and the third sensing column Col3 get larger and larger. On the condition that touch point is not generated, the signal amounts measured are assumed to be: -32dBm, -36dBm and -41dBm. When a certain touch point is generated, the signal amounts measured in the first sensing column Coll, the second sensing column Col2, and the third sensing column Col3 are respectively attenuated to: -33dBm, -44dBm and -44dBm. Thereby, the signal variations (attenuation amounts) of the first sensing column Coll, the second sensing column Col2, and the third sensing column Col3 before and after the touch point is generated, can be obtained, wherein the signal variation of the second sensing column Col2 is the largest.

**Table 1**

| | The first sensing column (Col1) | The second sensing column (Col2) | The third sensing column (Col3) |
|---|---|---|---|
| Touch point not generated | -32 | -36 | -41 |
| Touch point generated | -33 | -44 | -44 |
| Signal variation | -1 | -8 | -3 |
| Unit: dBm | | | |

On the other hand, illustration will be made by comparing the sense signals Sense_Sig2 between different rows. Similarly, the drive signal Drive_Sig enters the sensing matrix from the left side in FIG. 6; as shown in the following Table 2. Theoretically, the signal amounts measured in the first sensing row Row1, the second sensing row Row2, and the third sensing row Row3 will be the same on the condition that touch point is not generated, and herein the amount is -34dBm. When touch point is generated, the signal amounts measured in the first sensing row Row1, the second sensing row Row2, and the third sensing row Row3 are assumed to be respectively attenuated to: -40dBm, -45dBm and -40dBm. Thereby, the signal variations of the first sensing row Row1, the second sensing row Row2, and the third sensing row Row3 before and after the touch point is generated can be obtained, wherein the signal variation of the second sensing row Row2 is the largest.

**Table 2**

| | The first sensing row (Row1) | The second sensing row (Row2) | The third sensing row (Row3) |
|---|---|---|---|
| Touch point not generated | -34 | -34 | -34 |
| Touch point generated | -40 | -45 | -40 |
| Signal variation | -6 | -11 | -6 |
| Unit: dBm | | | |

Therefore, with signal variations of all rows and columns obtained, location of the actual touch point (circled with dotted line in FIG. 6) can be detected by further calculating intersection of the second sensing column Col2 and the second sensing row Row2 with maximum variations.

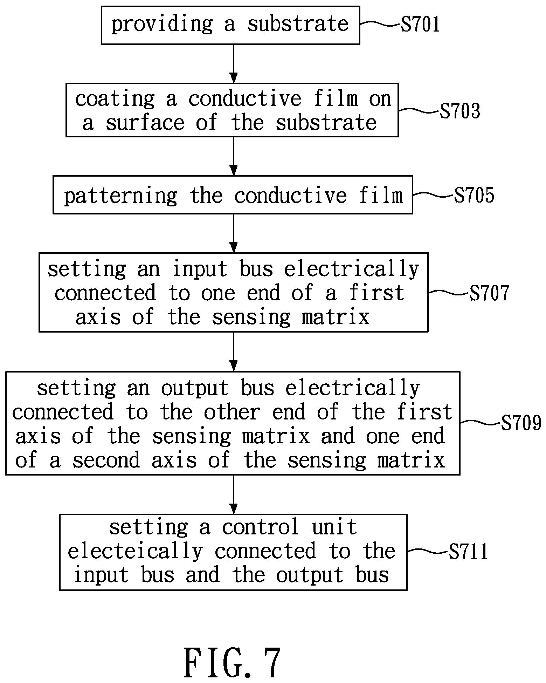

FIG.7 is a flowchart of a method for manufacturing a capacitive touch panel in accordance with a first embodiment of the present disclosure. As depicted, a method for manufacturing the capacitive touch panel is provided in the present embodiment, comprising the steps of: providing a substrate (S701) used as a supporting base for the subsequent process; coating a conductive film on a surface of the substrate (S703), wherein coating on the upper surface or on the lower surface of the substrate can be determined according to actual design without limitation. The material of the conductive film can be, for example, selected from the group consisting of Indium Tin Oxide (ITO), Indium Zinc Oxide (IZO), Gallium Zinc Oxide (GZO), Electroconductive Polymer, Carbon Nanotube-based Thin Films (CNT), ITO Nanoparticles, Nanowires, Mg(OH)2 : C, Graphene, or Zinc Oxide (ZnO).

Next, the method further comprises patterning the conductive film (S705) to form a sensing matrix by arranging a plurality of conductive elements. Those skilled in the art know that the process of patterning the conductive film approximately comprises baking, photomask alignment, exposing, developing and etching, etc. which is the so-called photo process, so no more details are described hereby. The present disclosure performs the patterning process on a single-layer conductive film once so as to achieve the architecture of the required sensing matrix.

Thereafter, the subsequent metal wiring process can be continued by setting an input bus electrically connected to one end of a first axis of the sensing matrix (S707), and setting an output bus electrically connected to the other end of the first axis of the sensing matrix and one end of a second axis of the sensing matrix (S709), wherein sequence of the steps (S707) and (S709) can be exchanged or adjusted in accordance with actual requirement of the process, which is not used to limit the present disclosure.

Incidentally, step (S703) to the step (S709) illustrate a procedure for making a touch sensor on a substrate.

Finally, the method further comprises setting a control unit electrically connected to the input bus and the output bus (S711), wherein the control unit can be made, for example, on a printed circuit board or a flexible circuit board and then electrically connected to the input bus and the output bus. Thereby, manufacturing of the capacitive touch panel in accordance with the embodiment can be finished.

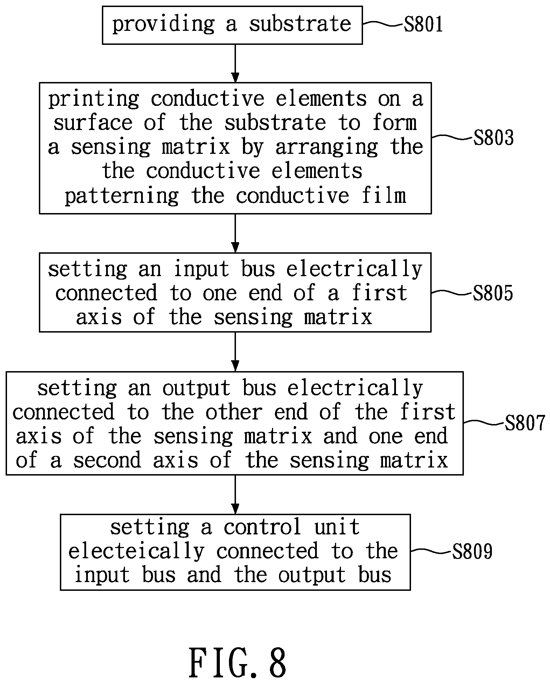

FIG. 8 is a flowchart of a method for manufacturing a capacitive touch panel in accordance with a second embodiment of the present disclosure. The difference between the flowchart of the present embodiment and the flowchart of the first embodiment lies in that after providing a substrate (S801), the conductive elements are printed directly on a surface (upper surface or lower surface) of a substrate with a printing technology to form a sensing matrix by arranging conductive elements (S803) in accordance with the present embodiment. Thereby, the process required for the present embodiment is more simplified than that of the first embodiment.

The subsequent steps from (S805) to (S809) are metal wiring process steps for setting an input bus, an output bus, and a process for setting the control unit.

In conclusion, the present disclosure designs a plane matrix mode of a sensing matrix as an architecture of a touch sensor, which can not only effectively simplify the overall architecture of the touch panel to reduce manufacturing process and accelerate production speed, but can also reduce consumption of materials and complexity of manufacturing process so as to reduce production cost dramatically and promote production yield. Besides, the capacitive touch panel of the present disclosure can be simply integrated with various types of display screens in practical application.

## Claims

1. A capacitive touch panel (1), comprising:
a substrate (10) and a touch sensor (11) with a plurality of conductive elements (110) arranged to form a single-layer plane sensing matrix on a same surface of the substrate (10) to generate sense signal of a first axis and a second axis of the sensing matrix, wherein the conductive elements are arranged in rows extending parallel to the first axis and in columns extending parallel to the second axis, wherein each two adjacent conductive elements (110) form first parasitic capacitors (113) therebetween on the first axis and second axis of the sensing matrix, respectively, and each conductive element (110) forms a second parasitic capacitor (114) with ground; and
wherein the touch sensor (11) further comprises:
an input bus (111) electrically connected to one end of the rows of the sensing matrix;
and
an output bus (112) electrically connected to one end of the columns of the sensing matrix.

2. The capacitive touch panel (1) of claim 1, wherein the output bus (112) is further electrically connected to another end of the rows of the sensing matrix.

3. The capacitive touch panel (1) of claim 1, wherein the input bus (111) is further electrically connected to another end of the columns of the sensing matrix.

4. The capacitive touch panel of any of the preceding claims, further comprising:
a control unit electrically connected to the input bus and the output bus, generating a drive signal to the input bus and receiving the sense signal through the output bus.

5. The capacitive touch panel of claim 1, wherein shape of the conductive elements (110) is rhombic, round, oval, polygonal, or cross.

6. The capacitive touch panel (1) of claim 1, wherein material of the conductive elements (110) is selected from the group consisting of Indium Tin Oxide (ITO), Indium Zinc Oxide (IZO), Gallium Zinc Oxide (GZO), Electroconductive Polymer, Carbon Nanotube-based Thin Films (CNT), ITO Nanoparticles, Nanowires, Mg(OH)2 : C, Graphene, or Zinc Oxide (ZnO).

7. A method for manufacturing a capacitive touch panel (1), comprising the steps of:
forming a single-layer plane sensing matrix by arranging a plurality of conductive elements (110) on a surface of a substrate (10), wherein the conductive elements are arranged in rows extending parallel to a first axis of the sensing matrix and in columns extending parallel to a second axis of the sensing matrix;
setting an input bus (111) electrically connected to one end of the rows of the sensing matrix; and
setting an output bus (112) electrically connected to one end of the columns of the sensing matrix; and
wherein each two adjacent conductive elements (110) form first parasitic capacitors (113) therebetween on the first axis and second axis of the sensing matrix, respectively, and each conductive element (110) forms a second parasitic capacitor (114) with ground.

8. The method for manufacturing capacitive touch panel (1) of claim 7, the output bus (112) is further electrically connected to another end of the rows of the sensing matrix.

9. The method for manufacturing capacitive touch panel (1) of claim 8, wherein the input bus (111) is further electrically connected to another end of the columns of the sensing matrix.

10. The method for manufacturing capacitive touch panel of claim 7, 8, or 9, further comprising:
setting a control unit electrically connected to the input bus and the output bus.

11. The method for manufacturing capacitive touch panel (1) of claim 7, wherein the step of forming the sensing matrix further comprises:
coating a conductive film on the surface of the substrate (10); and
patterning the conductive film.

12. The method for manufacturing capacitive touch panel (1) of claim 7, wherein the step of forming the sensing matrix comprises printing the conductive elements (110) on the surface of the substrate (10) with a printing technology.

## Patentansprüche

1. Kapazitives berührungsempfindliches Bedienfeld (1), das Folgendes umfasst:
ein Substrat (10) und einen Berührungssensor (11) mit einer Vielzahl von leitfähigen Elementen (110), die so angeordnet sind, dass sie eine einschichtige ebene Erfassungsmatrix zum Erzeugen von Erfassungssignalen einer ersten Achse und einer zweiten Achse der Erfassungsmatrix auf einer gleichen Oberfläche des Substrats (10) bilden, wobei die leitfähigen Elemente in Reihen und Spalten angeordnet sind, wobei sich die Reihen parallel zu der ersten Achse erstrecken und sich die Spalten parallel zu der zweiten Achse erstrecken, wobei jede zwei benachbarten leitfähigen Elemente (110) erste parasitäre Kondensatoren (113) dazwischen auf der ersten Achse bzw. der zweiten Achse der Erfassungsmatrix bilden, und wobei jedes leitfähige Element (110) einen zweiten parasitären Kondensator (114) mit einer Erdung bildet; und
wobei der Berührungssensor (11) ferner Folgendes umfasst:
eine Eingangsleitung (111), die mit einem Ende der Reihen der Erfassungsmatrix elektrisch verbunden ist; und
eine Ausgangsleitung (112), die mit einem Ende der Spalten der Erfassungsmatrix elektrisch verbunden ist.

2. Kapazitives berührungsempfindliches Bedienfeld (1) gemäß Anspruch 1, wobei die Ausgangsleitung (112) ferner mit einem anderen Ende der Reihen der Erfassungsmatrix elektrisch verbunden ist.

3. Kapazitives berührungsempfindliches Bedienfeld (1) gemäß Anspruch 1, wobei die Eingangsleitung (111) ferner mit einem anderen Ende der Spalten der Erfassungsmatrix elektrisch verbunden ist.

4. Kapazitives berührungsempfindliches Bedienfeld gemäß einem der vorhergehenden Ansprüche, das ferner Folgendes umfasst:
eine Steuereinheit, die mit der Eingangsleitung und der Ausgangsleitung elektrisch verbunden ist und die ein Treibsignal an die Eingangsleitung erzeugt und ein Erfassungssignal durch die Ausgangsleitung empfängt.

5. Kapazitives berührungsempfindliches Bedienfeld (1) gemäß Anspruch 1, wobei die Form der leitungsfähigen Elemente (110) rhombisch, rund, oval, polygonal oder kreuzförmig ist.

6. Kapazitives berührungsempfindliches Bedienfeld (1) gemäß Anspruch 1, wobei das Material der leitfähigen Elemente (110) unter der Gruppe ausgewählt ist, die aus Indium-Zinnoxid (ITO), Indium-Zinkoxid (IZO), Gallium-Zinkoxid (GZO), elektrisch leitfähigem Polymer, dünnen Filmen auf der Basis von Kohlenstoff-Nanoröhren (CNT), ITO-Nanopartikeln, Nanodrähten, Mg(OH)2 : C, Graphen oder Zinkoxid (ZnO) besteht.

7. Verfahren zum Herstellen eines kapazitiven berührungsempfindlichen Bedienfeldes (1), wobei das Verfahren folgende Schritte umfasst:
Ausbilden einer einschichtigen ebenen Erfassungsmatrix durch Anordnen einer Vielzahl von leitungsfähigen Elementen (110) auf eine Oberfläche eines Substrats (10),
wobei die leitfähigen Elemente in Reihen und Spalten angeordnet werden, wobei sich die Reihen parallel zu der ersten Achse erstrecken und sich die Spalten parallel zu der zweiten Achse erstrecken,
wobei jede zwei benachbarten leitfähigen Elemente (110) erste parasitäre Kondensatoren (113) dazwischen auf der ersten Achse bzw. der zweiten Achse der Erfassungsmatrix bilden, und wobei jedes leitfähige Element (110) einen zweiten parasitären Kondensator (114) mit einer Erdung bildet;
Bereitstellen einer Eingangsleitung (111), die mit einem Ende der Reihen der Erfassungsmatrix elektrisch verbunden ist; und
Bereitstellen einer Ausgangsleitung (112), die mit einem Ende der Spalten der Erfassungsmatrix elektrisch verbunden ist; und
wobei jede zwei benachbarten leitfähigen Elemente (110) erste parasitäre Kondensatoren (113) dazwischen auf der ersten Achse bzw. der zweiten Achse der Erfassungsmatrix bilden, und wobei jedes leitfähige Element (110) einen zweiten parasitären Kondensator (114) mit einer Erdung bildet.

8. Verfahren zum Herstellen eines kapazitiven berührungsempfindlichen Bedienfeldes (1) gemäß Anspruch 7, wobei die Ausgangsleitung (112) ferner mit einem anderen Ende der Reihen der Erfassungsmatrix elektrisch verbunden ist.

9. Verfahren zum Herstellen eines kapazitiven berührungsempfindlichen Bedienfeldes (1) gemäß Anspruch 8, wobei die Eingangsleitung (111) ferner mit einem anderen Ende der Spalten der Erfassungsmatrix elektrisch verbunden ist.

10. Verfahren zum Herstellen eines kapazitiven berührungsempfindlichen Bedienfeldes (1) gemäß einem der Ansprüche 7, 8 oder 9, das ferner Folgendes umfasst:
Bereitstellen einer Steuereinheit, die mit der Eingangsleitung und der Ausgangsleitung elektrisch verbunden ist.

11. Verfahren zum Herstellen eines kapazitiven berührungsempfindlichen Bedienfeldes (1) gemäß Anspruch 7, wobei der Schritt des Ausbildens der Erfassungsmatrix ferner Folgendes umfasst:
Beschichten der Oberfläche des Substrats mit einer leitfähigen Beschichtung (10); und
Strukturieren der leitfähigen Beschichtung.

12. Verfahren zum Herstellen eines kapazitiven berührungsempfindlichen Bedienfeldes (1) gemäß Anspruch 7, wobei der Schritt des Ausbildens der Erfassungsmatrix das Drucken der leitfähigen Elemente (110) auf die Oberfläche des Substrats (10) mittels einer Drucktechnik umfasst.

## Revendications

1. Panneau tactile capacitif (1), comprenant :
un substrat (10) et un capteur tactile (11) avec une pluralité d'éléments conducteurs (110) agencés pour former une matrice de détection plane monocouche sur une même surface du substrat (10) pour générer un signal de détection d'un premier axe et d'un second axe de la matrice de détection, dans lequel les éléments conducteurs sont agencés en rangées s'étendant parallèlement au premier axe et en colonnes s'étendant parallèlement au second axe, dans lequel chaque deux éléments conducteurs (110) adjacents forment des premiers condensateurs parasites (113) entre eux sur le premier axe et le second axe de la matrice de détection, respectivement, et chaque élément conducteur (110) forme un second condensateur parasite (114) avec la terre ; et
dans lequel le capteur tactile (11) comprend en outre :
un bus d'entrée (111) connecté électriquement à une extrémité des rangées de la matrice de détection ; et
un bus de sortie (112) connecté électriquement à une extrémité des colonnes de la matrice de détection.

2. Panneau tactile capacitif (1) selon la revendication 1, dans lequel le bus de sortie (112) est en outre connecté électriquement à une autre extrémité des rangées de la matrice de détection.

3. Panneau tactile capacitif (1) selon la revendication 1, dans lequel le bus d'entrée (111) est en outre connecté électriquement à une autre extrémité des colonnes de la matrice de détection.

4. Panneau tactile capacitif selon l'une quelconque des revendications précédentes, comprenant en outre :
une unité de commande connectée électriquement au bus d'entrée et au bus de sortie, générant un signal d'excitation sur le bus d'entrée et recevant le signal de détection par le biais du bus de sortie.

5. Panneau tactile capacitif selon la revendication 1, dans lequel la forme des éléments conducteurs (110) est rhombique, arrondie, ovale, polygonale ou cruciforme.

6. Panneau tactile capacitif (1) selon la revendication 1, dans lequel le matériau des éléments conducteurs (110) est choisi dans le groupe constitué d'oxyde d'indium-étain (ITO), d'oxyde d'indium-zinc (IZO), d'oxyde de gallium-zinc (GZO), de polymère électro-conducteur, de films minces à base de nanotubes de carbone (CNT), de nanoparticules d'ITO, de nanofils, de Mg(OH)₂ : C, de graphène ou d'oxyde de zinc (ZnO).

7. Procédé de fabrication d'un panneau tactile capacitif (1), comprenant les étapes de :
formation d'une matrice de détection plane monocouche en agençant une pluralité d'éléments conducteurs (110) sur une surface d'un substrat (10), dans lequel les éléments conducteurs sont agencés en rangées s'étendant parallèlement à un premier axe de la matrice de détection et en colonnes s'étendant parallèlement à un second axe de la matrice de détection ;
paramétrage d'un bus d'entrée (111) connecté électriquement à une extrémité des rangées de la matrice de détection ; et
paramétrage d'un bus de sortie (112) connecté électriquement à une extrémité des colonnes de la matrice de détection ; et
dans lequel chaque deux éléments conducteurs (110) adjacents forment des premiers condensateurs parasites (113) entre eux sur le premier axe et le second axe de la matrice de détection, respectivement, et chaque élément conducteur (110) forme un second condensateur parasite (114) avec la terre.

8. Procédé de fabrication de panneau tactile capacitif (1) selon la revendication 7, dans lequel le bus de sortie (112) est en outre connecté électriquement à une autre extrémité des rangées de la matrice de détection.

9. Procédé de fabrication de panneau tactile capacitif (1) selon la revendication 8, dans lequel le bus d'entrée (111) est en outre connecté électriquement à une autre extrémité des colonnes de la matrice de détection.

10. Procédé de fabrication de panneau tactile capacitif selon la revendication 7, 8 ou 9, comprenant en outre :
le paramétrage d'une unité de commande connectée électriquement au bus d'entrée et au bus de sortie.

11. Procédé de fabrication de panneau tactile capacitif (1) selon la revendication 7, dans lequel l'étape de formation de la matrice de détection comprend en outre :
l'application d'un film conducteur sur la surface du substrat (10) ; et
la modélisation du film conducteur.

12. Procédé de fabrication de panneau tactile capacitif (1) selon la revendication 7, dans lequel l'étape de formation de la matrice de détection comprend l'impression des éléments conducteurs (110) sur la surface du substrat (10) avec une technologie d'impression.
